# EUROPÄISCHE PATENTANMELDUNG

(11) **EP 1 525 830 A2**
(43) Veröffentlichungstag der Anmeldung: **27.04.2005**
(21) Anmeldenummer: 04015985.7
(22) Anmeldetag: 07.07.2004
(51) Int. Cl.: A47G 27/04, C09J 7/02

(54) **System und Verfahren zur Verlegung von Bodenbelägen**

(30) Priorität: 21.10.2003 DE 10348783
(71) Anmelder: Uzin Tyro AG, 6374 Buochs (CH)
(72) Erfinder: Sieber, Marco, 6048 Horw (CH); Sieber, Reto, 6019 Sigigen (CH)
(74) Vertreter: Altenburg, Udo, Dipl.-Phys.

(57) **Zusammenfassung**

Die Erfindung betrifft ein System und ein Verfahren zur Verlegung von Bodenbelägen, insbesondere Teppichböden, auf Böden, insbesondere auf Treppen, wobei das System ein Selbstklebeband und eine Klebemasse aufweist, wobei das Selbstklebeband eine Trägerschicht aufweist, welche an einer oberen, dem Bodenbelag zugewandten Oberfläche und an einer unteren, dem Boden bzw. der Treppe zugewandten Oberfläche mit einer Haftkleberbeschichtung beschichtet ist. Die Klebemasse wird zumindest partiell zum Verkleben eines Rückens des Bodenbelags aufgebracht, insbesondere in Bereichen mit besonderer Scher- und/oder Schälbelastung des Bodenbelags.

## Beschreibung

Die vorliegende Erfindung betrifft ein System und ein Verfahren zur Verlegung von Bodenbelägen, insbesondere Teppichböden, auf Böden, insbesondere auf Treppen.

Generell werden heute Bodenbeläge, z.B. Teppichböden, PVC-Bodenbeläge oder Ähnliches in der Regel mit lösungsmittelhaltigen, flüssigen Kontaktklebstoffen in Bereichen fixiert, welche besonderen Trittbelastungen ausgesetzt sind. Beispielsweise gilt dies für den Bereich von Treppenstufen, wobei bei einer entsprechenden Bodenbelagsverlegung sowohl die Treppenstufe als Untergrund mit entsprechenden Kontaktklebstoffen eingestrichen wird, als auch der Rücken des Bodenbelags selbst, und wobei beim Zusammenbringen dieser beiden klebstoffbeschichteten Teile eine feste Verbindung erreicht wird.

Diese bekannte Vorgehensweise ist einerseits aufwändig und andererseits beinhalten die entsprechenden flüssigen Kontaktklebstoffe üblicherweise Lösungsmittel, welche vermieden werden sollten, da diese zum Einen gesundheitsschädigend sein können und zum Anderen unter bestimmten Umständen sogar explosionsgefährlich sein können. Allerdings liegt ein Vorteil dieser bestehenden Technik darin, dass sofort nach Aufbringen eines entsprechenden Bodenbelags dieser sofort ohne weitere Wartezeit und ohne weiteres Abbinden der entsprechenden Kontaktklebstoffe fest verklebt ist und insbesondere im Treppenbereich die Treppenstufen sofort benutzbar sind. Eine längere Sperrung von Treppenhäusern, welche beispielsweise bei entsprechenden Renovierungsmaßnahmen ansonsten vorgenommen werden müsste, kann somit vermieden werden. Auch kann bereits während der Montage eine Montageperson sofort auf den Treppenstufen auftreten, welche bereits mit einem Bodenbelag verklebt wurden.

Nun gibt es seit einiger Zeit auch die Möglichkeit, Bodenbeläge, insbesondere Teppiche, mit doppelseitigen Teppichverlegebändern oder doppelseitigen Selbstklebebändern auf Böden, also auch auf Treppen, zu verkleben. So ist beispielsweise aus dem europäischen Patent Nr. 11 17 746 eine Selbstklebefolie zum Verlegen eines Fußbodenbelags auf einem Fußboden bekannt, welche beidseitig eine Trägerschicht aus Kunststofffolie, eine Haftkleberbeschichtung mit an Ober- und Unterseite unterschiedlicher Haftstärke aufweist, wobei diese Selbstklebefolie mit einer Mindestbreite von 350 mm zum großflächigen Abdecken des mit dem Fußbodenbelag zu belegenden Fußbodens ausgebildet ist. Eine Bodenbelagsverklebung mit einer solchen Selbstklebefolie hat den Vorteil, dass unmittelbar eine Klebekraft aufgebaut ist und eine solche Selbstklebefolie rückstandsfrei vom Untergrund entfernbar ist. Langfristig kann jedoch unter bestimmten außergewöhnlichen Belastungsbedingungen die Möglichkeit bestehen, dass die Klebekraft einer solchen Selbstklebefolie zum Bodenbelag hin u.U. nicht so hoch ist, wie dies im Fall der oben beschriebenen flüssigen Kontaktklebstoffe der Fall sein kann, da die Klebstoffbeschichtung einer solchen Selbstklebefolie - anders als die oben beschriebenen Kontaktklebstoffe - nicht in den Teppichrücken hineinfließen kann, um somit dauerhaft eine besonders feste Verbindung mit allen marktgängigen Rücken von entsprechenden Bodenbelägen einzugehen. So kann an besonders belasteten Trittstellen, welche einer erhöhten Scher- und Zugbelastung ausgesetzt sein können, insbesondere im Bereich der Setzstufe (vertikaler Teil einer Treppenstufe), und an der Stufenkante von Treppenstufen sich ein entsprechend befestigter Bodenbelag im Laufe der Zeit wieder ablösen oder sich an entsprechenden Stellen ausbeulen. Da entsprechende Selbstklebefolien speziell auf glatten Rücken von Bodenbelägen besonders gut haften, kann sich das geschilderte Problem bei Teppichrücken auf Gewebe- oder Textilbasis, welche die große Mehrheit ausmachen, noch verstärken.

Es ist daher eine Aufgabe der vorliegenden Erfindung, die Nachteile des Standes der Technik zu überwinden und insbesondere ein System und ein Verfahren zur Verlegung von Bodenbelägen, insbesondere Teppichböden, auf Böden, insbesondere auf Treppen, vorzusehen, welches bei relativ einfacher und umweltfreundlicher Handhabbarkeit eine sichere Verankerung eines Bodenbelags auf einem Boden auch in besonders strapazierten Bereichen, beispielsweise auf einer Treppe, dauerhaft vorsieht.

Die Aufgabe wird erfindungsgemäß gelöst durch ein System zur Verlegung von Bodenbelägen gemäß Anspruch 1 sowie durch ein Verfahren zur Verlegung von Bodenbelägen gemäß Anspruch 25.

Vorteilhafte Ausführungsformen der Erfindung sind in den jeweiligen Unteransprüchen definiert.

Das erfindungsgemäße System zur Verlegung von Bodenbelägen, insbesondere Teppichböden, auf Böden, insbesondere auf Treppen, weist ein Selbstklebeband und eine zusätzliche Klebemasse auf. Erfindungsgemäß weist das Selbstklebeband des Systems eine Trägerschicht auf, welche an einer oberen, dem Bodenbelag zugewandten Oberfläche, und an einer unteren, dem Boden bzw. der Treppe zugewandten Oberfläche mit einer Haftkleberbeschichtung beschichtet ist. Die Klebemasse des erfindungsgemäßen Systems ist zumindest partiell zum Verkleben eines Rückens des Bodenbelags aufbringbar, insbesondere in Bereichen mit besonderer Scher- und/oder Schälbelastung. Das heißt, die Klebemasse ist entweder auf das Selbstklebeband, den Bodenbelagsrücken oder den Boden direkt aufbringbar.

Durch das erfindungsgemäße System ist eine sichere und dauerhafte Verankerung des zu verlegenden Bodenbelags auf dem Boden möglich, da der Bodenbelag dadurch erfindungsgemäß zum Einen durch das Selbstklebeband fest - und auch in Form - gehalten wird und zum Anderen durch die zusätzlich aufgebrachte Klebemasse eine zumindest partiell noch stärkere Fixierung des Bodenbelags erfolgt. Im Treppenbereich wird somit durch das Selbstklebeband ein Verschieben des zu fixierenden Bodenbelags zur Treppenkante hin verhindert, wobei die zusätzlich aufgebrachte Klebemasse sich besonders fest mit dem Rücken des Bodenbelags verbinden kann und gegebenenfalls besonders fest klebend entsprechend aushärtet. Bevorzugt wird die Klebemasse dabei als "Wust" oberhalb und unterhalb der Stufenkante aufgebracht, da dort die bereits oben beschriebenen Scher- und/oder Schälbelastungen besonders stark sind.

Bevorzugt ist eine Ausführungsform des erfindungsgemäßen Systems, bei welcher die Klebemasse auf die obere Oberfläche des Selbstklebebandes oder den Bodenbelagsrücken zwischen Selbstklebeband und dem Rücken des Bodenbelags aufbringbar ist. Somit ist es gegebenenfalls möglich, dass das zum Boden besonders gut haftende, aber dennoch wiederablösbare Selbstklebeband verhindert, dass die zusätzliche Klebemasse mit dem Boden direkt in Verbindung kommt, wodurch trotz sicherer Verklebung, welche durch Verbindung des Rückens des Bodenbelags mit der oberen Oberfläche des Selbstklebebandes gewährleistet ist, dennoch eine im Wesentlichen rückstandsfreie Wiederablösbarkeit des gesamten Systems erreicht werden kann, was beispielsweise bei Anwendungen in Mietwohnungen, auf Nutzböden oder im Messebau von besonderer Bedeutung sein kann. Die Handhabbarkeit des gesamten Systems wird somit erfindungsgemäß weiter verbessert.

Bevorzugt ist eine Ausführungsform des erfindungsgemäßen Systems, bei welcher die Klebemasse in pastöser, flüssiger oder heiß-schmelzender Form vorliegt. Somit ist eine einfache Handhabbarkeit gegeben und die Klebemasse des erfindungsgemäßen Systems kann dennoch besonders gut und einfach sowie dauerhaft eine feste Verbindung mit dem Rücken des Bodenbelags eingehen, da sie so besonders einfach in den Rücken des Bodenbelags eindringen kann.

In diesem Zusammenhang ist es besonders bevorzugt, falls die Klebemasse des erfindungsgemäßen Systems bezüglich dem Rücken des Bodenbelags optimierte Hafteigenschaften aufweist, d.h. die Eigenschaften der Klebemasse entsprechend den Eigenschaften des Bodenbelags optimiert sind.

Bevorzugt ist eine Ausführungsform des erfindungsgemäßen Systems, bei welcher die Klebemasse eine Klebemasse auf Dispersionsbasis oder ein Reaktivsystem ist. Bevorzugt ist die Klebemasse aus der Gruppe Epoxidharz-Klebstoffe, insbesondere 1 K- oder 2 K-Systeme, Polyurethan-Klebstoffe, insbesondere 1 K-und 2 K-Systeme, Acrylat oder Metacrylat-Klebstoffe, insbesondere 1 K-Systeme, MS- oder MSP-Polymer, Hotmelt, insbesondere reaktiver Hotmelt, bevorzugt auf PU- oder EVA-Basis, ist. Besonders bevorzugt sind feuchtigkeitsabbindende 1 K-Reaktivsysteme oder wärmehärtbare, thermoaktivierbare 1 K-Systeme. Entsprechende Klebstoffe bieten eine besonders dauerhafte und sichere Verankerung des zu fixierenden Bodenbelags.

Um die Verarbeitbarkeit des erfindungsgemäßen Systems weiter zu verbessern, kann gemäß einer bevorzugten Ausführungsform der Erfindung die Klebemasse in einer Kartusche, einem Schlauch oder einem Beutel vorliegen und durch eine entsprechende Presspistole, welche entsprechend zur Aufnahme der Kartusche, des Schlauchs oder des Beutels geeignet ist, verarbeitbar sein. Die Klebemasse kann auch in einer Flasche, einer Dose oder einer Druckflasche vorliegen, aus welcher die Klebmasse entnehmbar sein kann. Die Klebmasse kann auch als Klebstoffstange ohne weitere Ummantelung vorliegen, welche dann bevorzugt mit einer entsprechenden Heißpresspistole verarbeitbar sein kann.

Je nach zu verklebendem Bodenbelag kann die Trägerschicht des Selbstklebebandes des erfindungsgemäßen Systems gemäß einer bevorzugten Ausführungsform aus einem Fadengelege, Gewebe, Flies oder Kunststofffolie bestehen. Das Gewebe kann besonders bevorzugt ein synthetisches Gewebe oder ein Gewebe aus Viskose, Baumwolle oder Zellwolle sein. Die Kunststofffolie kann besonders bevorzugt aus Polyethylen (PE), Polypropylen (PP), Polyolefin (PO), Polyester (PET) oder Polyamid (PA) bestehen.

Insbesondere im Fall, dass die Trägerschicht des Selbstklebebandes des erfindungsgemäßen Systems aus Kunststofffolie besteht, kann zur weiteren Verbesserung der Stabilität des Selbstklebebandes des Systems dieses zumindest an der oberen Oberfläche eine zusätzliche textile Struktur aufweisen. Diese zusätzliche textile Struktur kann insbesondere bei einem möglicherweise gewünschten Wiederablösungsvorgang die Dimensionsstabilität des Selbstklebebandes des erfindungsgemäßen Systems erhöhen und somit die Handhabbarkeit des Systems dahingehend verbessern, dass auch eine im Wesentlichen rückstandsfreie Wiederablösbarkeit zusätzlich verbessert bzw. ermöglicht werden kann.

Um die Verarbeitbarkeit des erfindungsgemäßen Systems weiter zu verbessern, ist es gemäß einer bevorzugten Ausführungsform möglich, dass das Selbstklebeband einen entfernbaren Abdeckfilm auf zumindest der oberen Oberfläche aufweist. Auf diese Art und Weise kann das ausgelegte und mit seiner unteren Oberfläche bereits verklebte Selbstklebeband noch eine Ausrichtung und/oder einen Zuschnitt des zunächst lose darauf aufgelegten Bodenbelags erlauben, wobei die eigentliche Verklebung erst nach Ausrichtung/Zuschnitt und abschnittsweisem Zurückschlagen und Entfernung des Abdeckfilms und Aufbringen der zusätzlichen Klebemasse und entsprechendem Aufdrücken des zu fixierenden Bodenbelags erfolgen kann.

Besonders bevorzugt ist eine Ausführungsform des erfindungsgemäßen Systems, bei welcher der entfernbare Abdeckfilm auf zumindest der oberen Oberfläche des Selbstklebebandes rutschhemmend ausgebildet ist. Dadurch kann eine Person, welche das erfindungsgemäße System verwendet, sicher auf den noch nicht entfernten Abdeckfilm des bereits auf dem Boden ausgelegten erfindungsgemäßen Selbstklebebandes treten, wodurch die Arbeitssicherheit und somit auch die Handhabbarkeit des Systems erfindungsgemäß weiter verbessert wird. Dies gilt insbesondere im Zusammenhang mit der Anwendung beim Verlegen von Bodenbelägen auf Treppen, wo ansonsten die Verletzungsgefahr durch Abrutschen besonders groß ist. Die rutschhemmende Ausgestaltung kann bevorzugt aus Noppen, Vertiefungen, Rillen oder einer Perforation mit Perforationslöchern bestehen. Eine besonders bevorzugte Ausführungsform mit Perforation wird weiter unten beschrieben.

Bevorzugt ist des Weiteren eine Ausführungsform des erfindungsgemäßen Systems, bei welcher das Selbstklebeband eine Breite im Bereich von 100 mm bis 2000 mm aufweist, insbesondere in einem Bereich von 140 mm bis 1500 mm, und insbesondere in einem Bereich von 170 mm bis 300 mm, wobei die Breite bei Verwendung für Treppen insbesondere 230 mm und bei Verwendung auf Böden mindestens 350 mm beträgt. So ist bevorzugt eine großflächige oder sogar vollflächige Verklebung und Abdeckung des mit einem Bodenbelag zu versehenden Bodens möglich, wobei die 230 mm im Anwendungsfall von Treppen genau der üblichen Stufenhöhe entsprechen. Die Verarbeitbarkeit des erfindungsgemäßen Systems wird somit besonders verbessert und entsprechend erleichtert, wobei auch die Festigkeit der Fixierung des Bodenbelags durch eine vollflächige oder großflächige Anwendung des Selbstklebebandes des erfindungsgemäßen Systems gemäß dieser bevorzugten Ausführungsform aufgrund der vergrößerten Klebefläche verbessert ist. Auch eine streifenweise und/oder abschnittsweise Gestaltung und Anwendung des Selbstklebebandes des erfindungsgemäßen Systems ist bevorzugt möglich und kann beispielsweise unter beengten räumlichen Verhältnissen auch durchaus besonders erwünscht und vorteilhaft sein.

Die Verbesserung der erfindungsgemäßen Klebewirkung kann auch dadurch erhöht werden, dass die zusätzliche Klebemasse großflächig oder sogar vollflächig zur Verklebung des Bodenbelags aufgebracht wird.

Erfindungsgemäß bevorzugt weist die Trägerschicht des Selbstklebebandes des Systems gemäß einer bevorzugten Ausführungsform eine Dicke in einem Bereich von 10 bis 200 µm, bevorzugt in einem Bereich von 25 bis 150 µm und besonders bevorzugt in einem Bereich von 50 bis 120 µm auf.

Um die Haftkräfte vorteilhaft einstellen zu können, und um bei guter Haftkraft gleichzeitig die Handhabung des erfindungsgemäßen Systems durch eine im Wesentlichen rückstandsfrei mögliche Wiederablösbarkeit weiter zu verbessern, kann die untere Oberfläche des Selbstklebebandes eine Haftkleberbeschichtung mit geringerer Haftstärke als die Haftstärke der Haftkleberbeschichtung an der oberen Oberfläche aufweisen. Insbesondere im Fall einer großflächigen Verklebung und Anwendung des Selbstklebebandes des erfindungsgemäßen Systems wird dabei dennoch eine zuverlässige Haftwirkung auf Dauer erzielt.

Bevorzugt sind zur Erzielung der unterschiedlichen Haftstärken unterschiedliche Kleberauftragsgewichte an beiden Oberflächen des Selbstklebebandes vorgesehen, wobei die Oberfläche mit der größeren Haftstärke ein höheres Kleberauftragsgewicht aufweist.

So kann bevorzugt das Kleberauftragsgewicht zumindest auf der oberen Oberfläche im Bereich von 5 bis 250 g/m² und insbesondere bevorzugt zumindest auf der unteren Oberfläche im Bereich von 8 bis 200 g/m², insbesondere besonders bevorzugt von 10 bis 150 g/m² liegen.

Bevorzugt kann auch zumindest die Haftkleberbeschichtung an der oberen Oberfläche des Selbstklebebandes des erfindungsgemäßen Systems aus weichmacherbeständigem Haftkleber bestehen. Besonders bevorzugt besteht die Haftkleberbeschichtung der oberen und der unteren Oberfläche des Selbstklebebandes des erfindungsgemäßen Systems aus weichmacherbeständigem Haftkleber.

Bevorzugt ist auch eine Ausführungsform, bei welcher die Haftkleberbeschichtung des Selbstklebebandes des erfindungsgemäßen Systems aus Hotmelt-Haftkleber oder besonders bevorzugt aus Acrylat-Haftkleber besteht. Somit kann - gerade auch im Zusammenwirken mit der erfindungsgemäßen Klebemasse - eine besonders sichere Verankerung des zu Verlegenden Bodenbelags über einen langen Zeitraum erfindungsgemäß besonders sichergestellt werden.

Bevorzugt ist ferner eine Ausführungsform des erfindungsgemäßen Systems, bei welcher die Haftkleberbeschichtung des Selbstklebebandes aus jeweils unterschiedlichen Haftklebern auf der oberen bzw. der unteren Oberfläche besteht. Somit kann durch entsprechende Anpassung eine besonders sichere und dauerhafte Verankerung des zu fixierenden Bodenbelags erfolgen. Dabei kann insbesondere berücksichtigt werden, dass zwischen der Haftkleberbeschichtung des Selbstklebebandes an der Oberseite und der zusätzlichen Klebemasse ein weiterer Synergieeffekt dergestalt entsteht, dass die entsprechend aufgebaute Haftwirkung zum Rücken des zu fixierenden Bodenbelags hin besonders stark und dauerhaft ist.

Bevorzugt weist die Haftstärke des Selbstklebebandes ohne zusätzliche Klebemasse des Systems zumindest an der unteren Oberfläche eine Klebekraft (gemessen als Schälkraft nach DIN 1939) in der Größenordnung von 1 bis 50 N/25mm, insbesondere von 3 bis 40 N/25mm und insbesondere von 5 bis 30 N/25mm auf.

Um eine Verschlechterung der Klebekraft und der fixierenden Wirkung des erfindungsgemäßen Systems zu minimieren bzw. zu vermeiden, welche durch Feuchtigkeitseinwirkung auftreten kann, falls ein Bodenbelag beispielsweise auf einem restfeuchten Estrichboden verlegt werden soll, ist die Trägerschicht und die Haftkleberbeschichtung des Selbstklebebandes des erfindungsgemäßen Systems bevorzugt wasserdampfdurchlässig ausgebildet mit einem sd-Wert in einem Bereich von 0,2 m bis 30 m, bevorzugt in einem Bereich von 0,5 m bis 10 m.

Die Wasserdampfdurchlässigkeit kann bevorzugt dadurch erreicht werden, dass die Trägerschicht und/oder die Haftkleberbeschichtung zumindest einer der Oberflächen des Selbstklebebandes des erfindungsgemäßen Systems perforiert ist bzw. sind, mit Perforationslöchern, welche über die ganze Fläche in einem Abstand voneinander von bevorzugt weniger als 10 cm verteilt sind und eine Querschnittsfläche von weniger als 4 mm² aufweisen. Die entsprechenden Perforationslöcher in der Trägerschicht und der Haftkleberbeschichtung zumindest einer der Oberflächen sind dabei bevorzugt fluchtend angeordnet.

Die oben beschriebene, bevorzugte rutschhemmende Gestaltung des entfernbaren Abdeckfilms zumindest der oberen Oberfläche des Selbstklebebandes des erfindungsgemäßen Systems kann besonders bevorzugt durch die oben beschriebene Perforation ausgebildet sein, wobei die fluchtende Anordnung der Perforationslöcher in der Trägerschicht und der Haftkleberbeschichtung zumindest einer der Oberflächen bevorzugt auch die Anordnung der Perforationslöcher der Perforation des entfernbaren Abdeckfilms betrifft.

Um die Verarbeitbarkeit weiter zu verbessern, ist das Selbstklebeband des erfindungsgemäßen Systems gemäß einer bevorzugten Ausführungsform zu einer Rolle gewickelt und durch Abrollen verarbeitbar.

Bei dem erfindungsgemäßen Verfahren zur Verlegung von Bodenbelägen, insbesondere Teppichböden, auf Böden, insbesondere auf Treppen, wird ein System vorgesehen, insbesondere ein System gemäß der oben beschriebenen Art, wobei das System ein Selbstklebeband und eine Klebemasse aufweist und wobei das Selbstklebeband eine Trägerschicht aufweist, welche an eine oberen, dem Bodenbelag zugewandten Oberfläche und an einer unteren, dem Boden bzw. der Treppe zugewandten Oberfläche mit einer Haftkleberbeschichtung beschichtet ist. Bei dem erfindungsgemäßen Verfahren wird das Selbstklebeband auf dem Boden aufgeklebt, bevorzugt großflächig bzw. vollflächig, oder auch abschnittsweise. Die Klebemasse wird zumindest partiell aufgebracht, insbesondere in Bereichen mit besonderer Scher- und/oder Schälbelastung, und der Bodenbelag wird mit einem Rücken des Bodenbelags auf das entsprechende System aufgeklebt. Durch das erfindungsgemäße Verfahren wird die Haftwirkung des Selbstklebebandes mit der dauerhaften und sicheren Verankerbarkeit durch die zusätzliche Klebemasse kombiniert, wodurch eine einfache Handhabbarkeit gegeben ist. Auch wird der Bodenbelag schon während der Abbindezeit der Klebemasse durch das Selbstklebeband in Form und in Position festgehalten. Über den weiteren Nutzungszeitraum unterstützt dann die abgebundene bzw. evtl. getrocknete Klebemasse die sichere Verklebung des Bodenbelags. Zunächst kann also das Selbstklebeband als eine Art Montagehilfe sein und dazu dienen, dass der verlegte Bodenbelag sofort form- und lagestabil begehbar ist. Dann kann die zusätzliche Klebemasse dazu dienen, dass eine verbesserte Langzeitstabilität auch unter großer Belastung geboten wird. Durch die erfindungsgemäße Verwendung sowohl eines Selbstklebebandes als auch einer Klebemasse ist neben dem beschriebenen kombinatorischen Effekt (sofortige Fixierung und hohe Dauerklebkraft) außerdem auch eine Widerablösbarkeit vom Boden, welche zumindest im wesentlichen auch rückstandsfrei erfolgen kann, geboten. Bei Verwendung einer Klebemasse alleine, wie dies im Stand der Technik praktiziert wird, lässt sich diese jedenfalls nicht rückstandsfrei vom Boden ablösen.

Um die Handhabbarkeit des erfindungsgemäßen Verfahrens weiter zu verbessern, insbesondere um eine im Wesentlichen rückstandsfreie Wiederablösbarkeit zu gewährleisten, wird die Klebemasse gemäß einer bevorzugten Ausführungsform des Verfahrens auf die obere Oberfläche des Selbstklebebandes auf die dortige Haftkleberbeschichtung oder auf den Bodenbelagsrücken aufgebracht und der Bodenbelag wird mit einem Rücken des Bodenbelags auf das entsprechende System aufgeklebt.

Bevorzugt kann gemäß einer weiteren Ausführungsform des erfindungsgemäßen Verfahrens der Boden großflächig oder vollflächig mit dem Selbstklebeband abgedeckt werden.

Auch die Klebemasse kann auf die gesamte Oberfläche aufgebracht werden, bevorzugt auf die gesamte Oberfläche des Selbstklebebandes. Somit ergibt sich eine erfindungsgemäß bevorzugt großflächige Verankerung.

Um ein Verschieben und/oder Zurückschneiden des zu fixierenden Bodenbelags zu erleichtern, kann gemäß einer bevorzugten Ausführungsform des erfindungsgemäßen Verfahrens das Selbstklebeband zumindest an seiner oberen Oberfläche mit einem entfernbaren Abdeckfilm versehen sein, welcher vor Aufbringen der Klebemasse und/oder vor Verkleben des Bodenbelags entfernt wird.

## Patentansprüche

1. System zur Verlegung von Bodenbelägen, insbesondere Teppichböden, auf Böden, insbesondere auf Treppen , **dadurch gekennzeichnet, dass** das System ein Selbstklebeband und eine Klebemasse aufweist, wobei das Selbstklebeband eine Trägerschicht aufweist, welche an einer oberen, dem Bodenbelag zugewandten Oberfläche und an einer unteren, dem Boden bzw. der Treppe zugewandten Oberfläche mit einer Haftkleberbeschichtung beschichtet ist, und wobei die Klebemasse zumindest partiell zum Verkleben eines Rückens des Bodenbelags aufbringbar ist, insbesondere in Bereichen mit besonderer Scherund/oder Schälbelastung.

2. System nach Anspruch 1, **dadurch gekennzeichnet, dass** die Klebemasse auf die obere Oberfläche des Selbstklebebandes oder den Bodenbelagsrücken zwischen Selbstklebeband und dem Rücken des Bodenbelags aufbringbar ist.

3. System nach Anspruch 1 oder 2, **dadurch gekennzeichnet, dass** die Klebemasse in pastöser, flüssiger oder heiß-schmelzender Form vorliegt.

4. System nach zumindest einem der vorherigen Ansprüche, **dadurch gekennzeichnet, dass** die Klebemasse bezüglich dem Rücken des Bodenbelags optimierte Hafteigenschaften aufweist.

5. System nach zumindest einem der vorherigen Ansprüche, **dadurch gekennzeichnet, dass** die Klebemasse eine Klebemasse auf Dispersionsbasis oder ein Reaktivsystem ist, bevorzugt aus der Gruppe Epoxidharzklebstoffe, insbesondere 1 K- oder 2 K-Systeme, Polyurethanklebstoffe, insbesondere 1 K-oder 2 K-Systeme, Acrylat- oder Methacrylatklebstoffe, insbesondere 1 K-Systeme, MS- oder MSP-Polymer, Hotmelt, insbesondere reaktiver Hotmelt, bevorzugt auf PU- oder EVA-Basis ist, wobei wärmhärtbare, thermoaktivierbare 1 K-Systeme bevorzugt sind, und wobei feuchtigkeitsabbindende 1 K-Reaktivsysteme besonders bevorzugt sind.

6. System nach zumindest einem der Ansprüche 1 bis 5, **dadurch gekennzeichnet, dass** die Klebemasse in einer Kartusche, einem Schlauch, einem Beutel oder als Klebstoffstange vorliegt und durch eine entsprechende Presspistole, welche entsprechend zur Aufnahme der Kartusche, des Schlauchs, des Beutels oder der Klebstoffstange geeignet ist, verarbeitbar ist, bevorzugt mit einer Heißpresspistole verarbeitbar ist.

7. System nach zumindest einem der Ansprüche 1 bis 5, **dadurch gekennzeichnet, dass** die Klebemasse in einer Flasche, einer Dose oder einer Druckflasche vorliegt.

8. System nach zumindest einem der vorherigen Ansprüche, **dadurch gekennzeichnet, dass** die Trägerschicht des Selbstklebeband aus Fadengelege, Gewebe, Flies oder Kunststofffolie besteht.

9. System nach zumindest einem der vorherigen Ansprüche, **dadurch gekennzeichnet, dass** das Selbstklebeband einen entfernbarer Abdeckfilm auf zumindest der oberen Oberfläche aufweist.

10. System nach Anspruch 9, **dadurch gekennzeichnet, dass** der entfernbare Abdeckfilm auf zumindest der oberen Oberfläche rutschhemmend ausgebildet ist, bevorzugt mit Noppen, Vertiefungen, Rillen oder einer Perforation mit Perforationslöchern.

11. System nach zumindest einem der vorherigen Ansprüche, **dadurch gekennzeichnet, dass** das Selbstklebeband eine Breite in einem Bereich von 100 mm bis 2000 mm aufweist, insbesondere in einem Bereich von 140 mm bis 1500 mm, und insbesondere in einem Bereich von 170 mm bis 300 mm, wobei die Breite bei Verwendung für Treppen insbesondere 230 mm, und bei Verwendung auf Böden mindestens 350 mm beträgt.

12. System nach zumindest einem der vorherigen Ansprüche, **dadurch gekennzeichnet, dass** die Trägerschicht des Selbstklebebandes eine Dicke in einem Bereich von 10 bis 200 µm, bevorzugt in einem Bereich von 25 bis 150 µm, und besonders bevorzugt in einem Bereich von 50 bis 120 µm aufweist.

13. System nach zumindest einem der vorherigen Ansprüche, **dadurch gekennzeichnet, dass** die untere Oberfläche des Selbstklebebandes eine Haftkleberbeschichtung mit geringerer Haftstärke als die Haftstärke der Haftkleberbeschichtung an der oberen Oberfläche aufweist.

14. System nach Anspruch 13, **dadurch gekennzeichnet, dass** unterschiedliche Kleberauftragsgewichte an beiden Oberflächen zur Erzielung unterschiedlicher Haftstärken vorgesehen sind, wobei die Oberfläche mit der größeren Haftstärke ein höheres Kleberauftragsgewicht aufweist.

15. System nach Anspruch 14, **dadurch gekennzeichnet, dass** das Kleberauftragsgewicht zumindest auf der oberen Oberfläche im Bereich von 5 bis 250 g/m² und insbesondere zumindest auf der unteren Oberfläche im Bereich von 8 bis 200 g/m², insbesondere von 10 bis 150 g/m² liegt.

16. System nach zumindest einem der vorherigen Ansprüche, **dadurch gekennzeichnet, dass** zumindest die Haftkleberbeschichtung an der oberen Oberfläche des Selbstklebebandes aus weichmacherbeständigem Haftkleber besteht, wobei bevorzugt die Haftkleberbeschichtung an der oberen Oberfläche des Selbstklebebandes und an der unteren Oberfläche des Selbstklebebandes aus weichmacherbeständigem Haftkleber besteht.

17. System nach zumindest einem der vorherigen Ansprüche, **dadurch gekennzeichnet, dass** die Haftkleberbeschichtung des Selbstklebebandes bevorzugt aus Hotmelt-Haftkleber oder besonders bevorzugt aus Acrylat-Haftkleber besteht.

18. System nach zumindest einem der vorherigen Ansprüche, **dadurch gekennzeichnet, dass** die Haftkleberbeschichtung des Selbstklebebandes aus jeweils unterschiedlichen Haftklebern auf der oberen bzw. der unteren Oberfläche besteht.

19. System nach zumindest einem der vorherigen Ansprüche, **dadurch gekennzeichnet, dass** ohne Klebemasse die Haftstärke des Selbstklebebandes zumindest an der unteren Oberfläche eine Klebekraft (gemessen als Schälkraft nach DIN 1939) in der Größenordnung von 1 bis 50 N/25mm, insbesondere von 3 bis 40 N/25mm und insbesondere von 5 bis 30 N/25mm aufweist.

20. System nach zumindest einem der vorherigen Ansprüche, **dadurch gekennzeichnet, dass** die Trägerschicht und die Haftkleberbeschichtung des Selbstklebebandes wasserdampfdurchlässig, ausgebildet sind mit einem sd-Wert in einem Bereich von 0,2 m bis 30 m, besonders bevorzugt in einem Bereich von 0,5 m bis 10 m.

21. System nach Anspruch 20, **dadurch gekennzeichnet, dass** die Trägerschicht und/oder die Haftkleberbeschichtung zumindest einer der Oberflächen des Selbstklebebandes perforiert ist bzw. sind, mit Perforationslöchern, welche über die ganze Fläche in einem Abstand voneinander von bevorzugt weniger als 10 cm verteilt sind und eine Querschnittsfläche von weniger als 4 mm² aufweisen.

22. System nach Anspruch 21, **dadurch gekennzeichnet, dass** die Perforationslöcher in der Trägerschicht und der Haftkleberbeschichtung zumindest einer der Oberflächen fluchtend angeordnet sind.

23. System nach Anspruch 10 und Anspruch 21 oder 22, **dadurch gekennzeichnet, dass** die Perforationslöcher der Perforation des entfernbare Abdeckfilms mit den Perforationslöchern der Trägerschicht und/oder der Haftkleberbeschichtung zumindest einer der Oberflächen des Selbstklebebandes fluchtend angeordnet sind.

24. System nach zumindest einem der vorherigen Ansprüche, **dadurch gekennzeichnet, dass** das Selbstklebeband zu einer Rolle gewickelt ist und durch abrollen verarbeitbar ist.

25. Verfahren zur Verlegung von Bodenbelägen, insbesondere Teppichböden, auf Böden, insbesondere auf Treppen, **dadurch gekennzeichnet, dass** ein System, insbesondere ein System gemäß zumindest einem der Ansprüche 1 bis 24, vorgesehen wird, welches ein Selbstklebeband und eine Klebemasse aufweist, wobei das Selbstklebeband eine Trägerschicht aufweist, welche an einer oberen, dem Bodenbelag zugewandten Oberfläche und an einer unteren, dem Boden bzw. der Treppe zugewandten Oberfläche mit einer Haftkleberbeschichtung beschichtet ist, dass das Selbstklebeband auf dem Boden aufgeklebt wird, dass die Klebemasse zumindest partiell aufgebracht wird, insbesondere in Bereichen mit besonderer Scher- und/oder Schälbelastung, und dass der Bodenbelag mit einem Rücken des Bodenbelags auf das System aufgeklebt wird.

26. Verfahren nach Anspruch 25, **dadurch gekennzeichnet, dass** die Klebemasse auf die obere Oberfläche des Selbstklebebandes auf die dortige Haftkleberbeschichtung oder auf den Bodenbelagsrücken aufgebracht wird, und dass der Bodenbelag mit dem Rücken des Bodenbelags auf das System aufgeklebt wird.

27. Verfahren nach Anspruch 25 oder 26, **dadurch gekennzeichnet, dass** der Boden vollflächig mit dem Selbstklebeband abgedeckt wird.

28. Verfahren nach zumindest einem der vorhergehenden Ansprüche, **dadurch gekennzeichnet, dass** das Selbstklebeband zumindest an seiner oberen Oberfläche einen entfernbarer Abdeckfilm aufweist, welcher vor Aufbringen der Klebemasse und/oder vor Verkleben des Bodenbelages entfernt wird.

29. Verfahren nach zumindest einem der vorhergehenden Ansprüche, **dadurch gekennzeichnet, dass** die Klebemasse auf die gesamten Oberfläche des Selbstklebebandes aufgebracht wird.
